Europäisches Patentamt

European Patent Office

Office européen des brevets

(19)

(11) Numéro de publication : **0 342 080 B1**

# (12) FASCICULE DE BREVET EUROPEEN

(45) Date de publication du fascicule du brevet :
**25.03.92 Bulletin 92/13**

(51) Int. Cl.$^5$ : **B29C 47/06, B29C 67/14**

(21) Numéro de dépôt : **89401139.4**

(22) Date de dépôt : **21.04.89**

(54) **Procédé de fabrication de résines thermoplastiques renforcées de fibres longues.**

(30) Priorité : **09.05.88 FR 8806220**

(43) Date de publication de la demande :
**15.11.89 Bulletin 89/46**

(45) Mention de la délivrance du brevet :
**25.03.92 Bulletin 92/13**

(84) Etats contractants désignés :
**AT BE CH DE FR GB IT LI LU NL SE**

(56) Documents cités :
EP-A- 0 133 825
EP-A- 0 189 749
EP-A- 0 291 023
DE-A- 3 506 673
FR-A- 2 353 936
GB-A- 1 094 439
GB-A- 1 386 066
US-A- 3 993 726
US-A- 4 312 917
US-A- 4 533 421
US-A- 4 564 648

(56) Documents cités :
JAPANESE PATENT GAZETTE, semaine 8731, section CH, classe A, no. 87216279(31), Derwent Publications Ltd, Londres, GB; & JP-A-62 141 035 (FURUKAWA ELECTRIC CO.) 24-06-1987
PATENT ABSTRACTS OF JAPAN, vol. 11, no. 155 (M-589)[2602], 20 mai 1987; & JP-A-61 284 416 (HOKKAI KOKI K.K.) 15-12-1986

(73) Titulaire : **ATOCHEM**
**4 & 8, Cours Michelet La Défense 10**
**F-92800 Puteaux (FR)**

(72) Inventeur : **Glemet, Michel**
**Rue Max Carpentier**
**F-27470 Serquigny (FR)**
Inventeur : **Gourdon, Bernard**
**La Chaumine**
**F-27930 Dardez-Evreux (FR)**
Inventeur : **Lottiau, Michel**
**40 Val Beneton**
**F-27300 Bernay (FR)**

(74) Mandataire : **Foiret, Claude et al**
**ATOCHEM, Département Propriété Industrielle, La Défense 10, Cédex 42**
**F-92091 Paris La Défense (FR)**

## Description

La présente invention concerne un procédé de fabrication de résines thermoplastiques renforcées de fibres longues. Le procédé consiste à imprégner intimement chaque fibre d'un polymère thermoplastique de mouillage avant de gainer les fibres par un polymère thermoplastique compatible avec le polymère thermoplastique de mouillage. L'imprégnation intime de chaque fibre consiste à imprégner des rovings par un polymère thermoplastique de mouillage dans une filière à alimentation en tête d'équerre. Les rovings imprégnés sont repris en sortie de filière de conformation dans une seconde filière également à alimentation en tête d'équerre où ils sont gainés par un polymère thermoplastique compatible avec le polymère thermoplastique de mouillage.

Il est connu de renforcer les résines thermoplastiques par des fibres longues. Le moyen le plus classique est de gainer par extrusion des mèches de fibres ou des rovings de résines thermoplastiques. Un problème cependant se pose, décrit et partiellement résolu dans le brevet britannique 1 094 439, résultant de la mauvaise adhérence aux fibres de certaines résines thermoplastiques, telles les polyoléfines. Il est remédié à cet inconvénient en imprégnant les fibres, préalablement à leur revêtement par la résine thermoplastique choisie, d'un polymère thermoplastique de mouillage tel qu'une polyoléfine modifiée par greffage d'un acide polycarboxylique éthyléniquement insaturé. Les méthodes d'imprégnation sont toutefois peu satisfaisantes, la plus réaliste consistant à faire passer les fibres en continu dans une solution de polymère de mouillage avant le revêtement final. Outre le risque de laisser dans le matériau des traces de solvant, le procédé est peu pratique et onéreux en ce qu'il nécessite une manipulation inopportune de solvant.

Dans le brevet des Etats-Unis d'Amérique 3,993,726 est décrit un procédé de fabrication en continu d'articles en résine thermoplastique renforcée de fibres longues de verre. Selon la technique décrite, le roving est imprégné d'un mélange de résine thermoplastique de mouillage et de résine thermoplastique à renforcer, dans une filière en tête d'équerre alimentée par une extrudeuse.

L'imprégnation des fibres se fait en épanouissant les fibres du roving dans la filière et en faisant passer lesdites fibres et le mélange thermoplastique dans une zone d'embarrage pour bien faire pénétrer la matière entre chaque fibre. Ce système est peu satisfaisant, car le polymère de mouillage dilué à l'autre polymère perd la majeure partie de son efficacité.

Selon le procédé de l'invention, il est possible de renforcer par des fibres le maximum de résine thermoplastique en utilisant le minimum de résine de mouillage grâce à une méthode simple de répartition maximum de ladite résine de mouillage au travers des fibres des rovings. Le procédé consiste à faire passer dans une première étape les rovings, après avoir soigneusement épanoui les fibres, dans une filière alimentée, en tête d'équerre, en résine thermoplastique de mouillage. Après imprégnation des fibres les rovings passent, dans une seconde étape, à travers une second filière, également en tête d'équerre, alimentée en résine thermoplastique de gainage compatible avec la résine thermoplastique de mouillage.

Dans une première étape, les rovings, préalablement à leur passage dans la filière d'imprégnation, sont épanouis de façon à étaler sensiblement côte à côte chacune des fibres de roving. Les rovings se trouvent dans ce cas sous forme de nappe ou de ruban constitué d'une succession de fibres individuelles continues parallèles. Pour réaliser cet alignement des fibres en épanouissant le roving on introduit les rovings dans la filière d'imprégnation alimentée en polymère thermoplastique de mouillage fondu après les avoir fait passer dans au moins une chicane d'une zone d'embarrage qui, forçant le roving, provoque l'étalement des fibres le constituant. La nappe ou le ruban ainsi formé est ensuite imprégné de résine thermoplastique de mouillage et tiré, avant la filière de conformation, dans un nouveau système d'embarrage formé de chicanes sensiblement parallèles à la ou les premières. Dans ce système, la nappe ou le ruban imprégné de résine thermoplastique de mouillage passe dans au moins deux chicanes opposées et parallèles l'une par rapport à l'autre. Dans ces conditions, l'ensemble des fibres imprégnées de résine thermoplastique de mouillage est, dans la première chicane, écrasé sur une de ses faces forçant la résine à s'infiltrer à l'état fondu entre les fibres pour passer vers la face opposée. L'effet inverse se produit quand l'ensemble des fibres imprégnées entre en contact avec la chicane opposée. Ce système d'embarrage avant et après le contact avec le polymère thermoplastique de mouillage permet l'imprégnation individuelle des fibres avec le minimum de polymère.

Les fibres imprégnées passent enfin dans une filière de conformation permettant de réaliser des rubans ou des joncs.

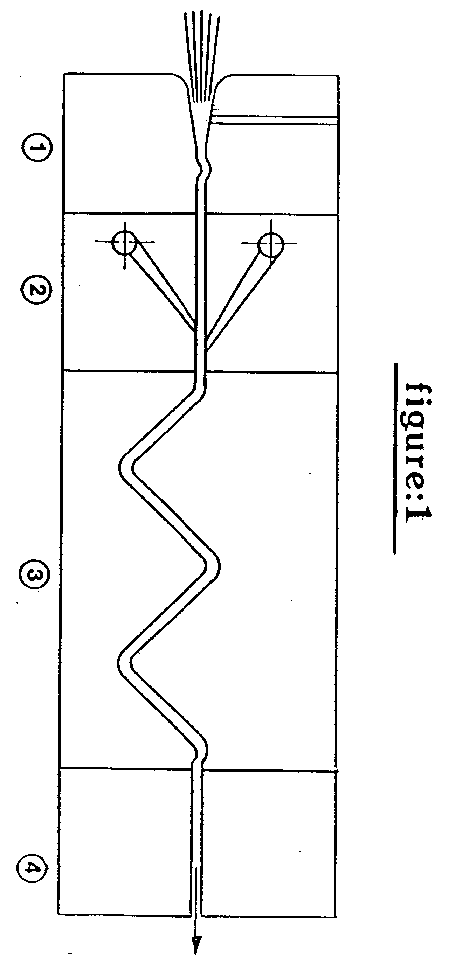

La Figure 1 annexée schématise l'outillage de cette première étape constituée : en 1 du système d'embarrage avant imprégnation, disposant éventuellement d'une prise de vide, en 2 de la filière d'imprégnation reliée à une extrudeuse non représentée, en 3 du système d'embarrage d'imprégnation des fibres et en 4 de la filière de conformation.

En sortie de filière de conformation, les fibres imprégnées de résine thermoplastique de mouillage sont dans la deuxième étape gainées par la résine thermoplastique à renforcer. Pour ce faire les fibres continues imprégnées de la résine thermoplastique de mouillage à une température de préférence supérieure d'environ

2

40°C à celle de fusion de ladite résine de mouillage passent dans une filière en tête d'équerre classique, telle qu'utilisée pour le revêtement de fil ou de cable. Cette filière est alimentée en résine thermoplastique destinée à être renforcée de fibres et se situe sensiblement dans l'alignement de la filière de conformation du système d'embarrage. En sortie de filière les rubans ou joncs sont granulés. Ces granulés à fibres longues, c'est-à-dire dont la longueur des fibres correspond à celle du granulé, sont particulièrement adaptés à l'injection, la compression et l'extrusion transfert.

Les fibres continues imprégnées de la résine de mouillage sortent de la filière de conformation, la résine de mouillage se trouvant à l'état fondu. Elles se refroidissent de préférence au contact de l'air ambiant avant de pénétrer dans la seconde filière alimentée en résine de gainage. Avant de pénétrer dans cette filière les fibres continues imprégnées de la résine de mouillage sont en général à une température comprise entre 40 et 80°C.

La distance entre la filière de conformation des fibres imprégnées de résine thermoplastique de mouillage et la filière de gainage dépend des caractéristiques thermiques de la résine employée. Cette distance dépend également de la vitesse de tirage du matériau extrudé. Cette distance doit de préférence être la plus réduite possible et de façon pratique se trouve habituellement comprise entre 0,5 et 4 mètres.

Les rapports massiques polymère de mouillage sur polymère standard de revêtement dépendent du taux massique de fibres visé en final. Habituellement les matériaux finalement obtenus contiennent de 20 à 40 % massique de fibres. Dans ces conditions, les fibres continues imprégnées seulement de la résine de mouillage comprennent habituellement en masse environ 70 à 75 % de fibres pour 30 à 25 % de polymère de mouillage. Finalement les matériaux obtenus possèdent des compositions massiques d'environ: 20 à 40 % de fibres, 8 à 17 % de polymère de mouillage, 72 à 43 % de polymère standard de revêtement.

Les fibres continues servant à renforcer les résines thermoplastiques sont connues. Elles sont organiques ou minérales. A titre d'exemple on peut citer les rovings de fibres de verre, de silice, de carbone ou encore d'aramide.

Comme il a été précisé, le polymère thermoplastique de mouillage doit être compatible avec le polymère thermoplastique de gainage. Cette compatibilité est un caractère, quoique bien connu de l'homme de l'art et d'importance pratique considérable, dont la définition scientifique n'a jamais été donnée de façon tout à fait satisfaisante. Sans entrer dans les détails fort controversés de miscibilité réciproque partielle des polymères considérés, on estime ici que deux polymères sont compatibles s'il est possible de les mélanger de façon à obtenir une matière présentant une tenue mécanique voisine de, ou supérieure à celle du plus faible des deux. Selon cette définition et à titre d'exemple les couples :

– polyéthylène haute densité greffé - polyéthylène basse densité
– polyéthylène haute densité greffé - copolymère éthylène-acétate de vinyle (EVA)
– EVA greffé - polychlorure de vinyle
– polypropylène greffé - polypropylène
– copolymère séquencé poly(éther-amide) - polyamide
– polyamide fonctionnalisé (par exemple $\alpha,\omega$ diamines, $\alpha,\omega$ diacides, $\alpha$ amine $\omega$ acide, monoamine) - polyamide
– EVA modifié - EVA ou polyéthylène basse densité (PEbd)
– polyéthylène basse densité linéaire (PEbdl)greffé - PEbdl ou PEbd

sont compatibles tandis qu'un homopolymère de chlorure de vinyle et un homopolymère de styrène sont incompatibles.

On entend par polymère thermoplastique de mouillage, un polymère permettant d'augmenter la surface de contact intime fibre-polymère jouant ainsi le rôle d'agent de couplage. Les rôles des agents de couplage sont expliqués dans Polymer Engineering Composite, M.O.W. Richardson - Appl. Sc. Publ. 1977, les plus connus étant les organosilanes.

Le polymère thermoplastique de mouillage est habituellement choisi parmi les polymères de basse viscosité, ou encore parmi les polymères dont la polarité est accrue par rapport aux polymères correspondants d'origine.

Le polymère de basse viscosité est de préférence un polymère dont la viscosité de fusion ($\theta f$ + 40°C) est au plus égale à celle d'un polypropylène d'indice de fluidité 20 (Melt Index) à 230°C sous 2,16 kg selon la norme ASTM D 1328.

Parmi les polymères de basse viscosité, on peut citer : les polymères modifiés par dégradation peroxydique, comme dans le cas par exemple du polypropylène, du polyamide, du polystyrène, ou encore les polymères résultant de la polyaddition d'un oligomère polyamide fonctionnalisé avec un coréactif tel que par exemple un polyépoxy ou un polyisocyanate ou d'un oligomère polypropylène fonctionnalisé avec un coréactif tel que par exemple un polyéther diol, le polybutadiène dihydroxylé ou un polyamide $\alpha,\omega$ diamine. Ces polymères de basse viscosité sont également obtenus à partir de polyesters saturés, tels que polybutylène téréphtalate (PBT) ou polyéthylène téréphtalate (PET), dont les chaines sont coupées par dégradation contrôlée de façon à obtenir un oligomère fonctionnel. Cette formation d'oligomère fonctionnel se réalise par malaxage à chaud du polyester saturé en présence de diamine et plus particulièrement de dodécanediamine.

Parmi les polymères dont la polarité est accrue par rapport aux polymères correspondants d'origine, on préfère les polymères possédant des sites polaires éventuellement réactifs. Les polymères possédant des sites polaires sont généralement des polymères modifiés soit par greffage soit par séquençage à partir par exemple d'anhydride maléique, d'acide acrylique, d'acétate de vinyle dans le cas du polyéthylène, du polypropylène ou des copolymères, ou encore plus généralement à partir de composés fournissant par exemple des sites polaires du type cétone, aldéhyde, acide, ester, cyano, amine, etc...

Parmi les polymères modifiés par greffage ou séquençage particulièrement recommandés on peut citer : le polypropylène greffé tel que polypropylène greffé anhydride maléique ou acide acrylique ; le poly(éthylène-vinylacétate) en tant que tel ou greffé anhydride maléique ; le polyéthylène haute densité greffé tel que polyéthylène haute densité greffé acide acrylique ou anhydride maléique ; le polyéthylène basse densité linéaire greffé tel que polyéthylène basse densité linéaire greffé acide acrylique ou anhydride maléique ; les copolymères séquencés poly(éther-amide).

Certains polymères de mouillage peuvent être directement préparés par greffage ou dégradation contrôlé in situ dans l'étape d'imprégnation des rovings. Pour ce faire on fait réagir les constituants : polymère, agent de dégradation plus éventuellement agent de greffage, à l'état fondu dans l'extrudeuse alimentant la filière d'imprégnation. Dans le cas d'une dégradation par voie peroxydique, on choisit de préférence parmi les peroxydes ceux possédant une durée de demi-vie à la température de réaction, habituellement comprise entre 180 et 250°C, inférieure ou égale au temps de séjour du polymère dans l'extrudeuse. Les taux d'agent de greffage et/ou d'agent de dégradation sont généralement compris entre 0,5 et 3 % en poids par rapport au poids de polymère de base.

Les exemples suivants illustrent l'invention sans toutefois la limiter.

## EXEMPLE 1

On réalise en ligne la maléisation du polypropylène, avec une extrudeuse bi-vis corotatives, de diamètre 30 mm., pour l'alimentation de la filière d'imprégnation tête d'équerre avec zone d'embarrage.

La formulation pour préparer ce liant polyproplyène maléisé est la suivante :

| | |
|---|---|
| polypropylène 3050 MN4 | 100 parties |
| anhydride maléique | 0,85 % |
| peroxyde LUPEROX 101 (DHBP) | 0,7 % |
| chlorobenzène | 0,2 % |

Le polypropylène est préalablement mélange avec l'anhydride maléique en poudre puis incorporé au niveau de l'alimentation de l'extrudeuse par un doseur.

Le peroxyde solubilisé dans le chlorobenzène est injecté sous pression dans la matière fondue par l'intermédiaire d'une pompe doseuse.

La température de réaction matière est de 180°C.

Un dégazage est pratiqué en ligne sur l'extrudeuse, avec un vide de l'ordre de 10500 à 13500 Pa.

La valeur de l'indice de fusion (Melt Index) obtenu en filière est de 350 mesuré à 230°C sous 2,16 kg.

L'analyse en GPC donne les valeurs suivantes :

$M_w = 85000$ $M_n = 38000$ $I = 2,2$

Le pourcentage d'anhydride maléique dosé est de 3500 ppm.

On alimente avec ce polymère de mouillage un outillage selon la Figure 1 comportant les zones suivantes:

– zone 1 d'embarrage :
    . longueur : 60 mm
    . largeur : 100 mm
    . entrefer : 3 mm
    . entrée évasée et une chicane au dôme de 10 mm de hauteur
– zone 2 de filière d'imprégnation
    . longueur : 90 mm
    . largeur : 100 mm
    . deux canaux d'alimentation de 10 mm de diamètre
    . entrefer en sortie de zone : 3 mm
– zone 3 d'embarrage
    . longueur : 200 mm
    . largeur : 100 mm

. embarrage sinusoïdal à 3 crêtes
. amplitude inter-crêtes : 40 mm
. entrefer : 3mm
– zone 4 de conformation
. filière à 5 trous de 1,65 mm de diamètre
. longueur : 100 mm
. largeur : 100 mm

On fait passer dans la filière d'imprégnation maintenue à 210°C, 5 rovings de verre E 2400 tex.

Le débit polymère est de 1,2 Kg/h.

On tire à la vitesse de 4,6 m/mn. des joncs possédant un taux massique de verre d'environ 70 %.

Ces joncs passent ensuite dans une filière de gainage placée à 1 m de la première.

Cette seconde filière, sensiblement dans l'alignement de la première, est maintenue à la température de 210°C. Elle est montée en équerre sur une extrudeuse monovis maintenue à la température moyenne de 200°C et alimentée en polypropylène de Melt Index 12 à 230°C sous 2,16 Kg à raison de 10 Kg/h.

Des orifices de 4 mm de diamètre de cette filière sont tirés des joncs de taux de verre massique de 20 % environ qui sont ensuite refroidis et granulés à la longueur de 6 mm.

Des essais de flexion trois points (norme ISO 178) sont réalisés sur éprouvettes 80 x 10 x 4 mm moulées par injection.

Module de flexion : 2630 MPa

Contrainte à charge maxi. : 64,5 MPa

La résistance au choc par masse tombante (FWI) est mesurée sur éprouvettes 100 x 100 x 2,8 mm dans les conditions suivantes :

hauteur de chute : 1 mètre

diamètre du percuteur : 12,7 mm

masse du percuteur : 5,14 Kg

vitesse : 4,43 m/s

L'énergie de rupture ainsi mesurée est de 8,20 joules.

EXEMPLE 2 comparatif

On reprend l'Exemple 1 à l'exception près que les joncs de diamètre 4 mm sont réalisés directement dans la première filière à embarrage munie d'orifices de sortie de diamètre 4 mm. On n'effectue pas de surextrusion à l'aide d'un grade polypropylène de MI 12.

On obtient des joncs à 20 % de verre massique imprégnés du seul polymère de mouillage, découpés à 6 mm.

Les propriétés mécaniques du produit moulé par injection sont les suivantes :

Module de flexion : 2050 MPa

Contrainte à charge maxi. : 56,7 MPa

Energie de rupture (choc FWI) : 7,6 Joules

EXEMPLE 3

On reprend l'appareillage de l'Exemple 1 à l'exception près que la filière d'embarrage pour le polymère de mouillage est alimentée à partir d'une extrudeuse monovis de diamètre 30 mm. et de longueur égale à 22 diamètres. On fabrique sur cet appareillage des joncs et des granulés de polyamide 12 renforcés de fibres de verre.

La filière d'embarrage étant maintenue à 260°C, les rovings sont revêtus d'un oligomère de polyamide 12 mono $NH_2$ de masse moléculaire moyenne en nombre égale à 5000. Les joncs obtenus à taux massique de verre d'environ 70 % passent ensuite dans une filière maintenue à 280°C et alimentée en polyamide 12 grade extrusion de haute viscosité. Les granulés finalement obtenus possèdent un taux massique de verre d'environ 20 %.

Les propriétés mécaniques du produit obtenu sont les suivantes :

module de flexion : 3400 MPa

contrainte à charge maxi. : 110 MPa

énergie de rupture (choc FWI) : 8,75 Joules

EXEMPLE 4

Dans l'appareillage et les conditions de l'Exemple 3 on fabrique des joncs et des granulés de PBT renforcés de fibres de verre.

Les rovings passent d'abord dans la filière d'embarrage à 260°C alimentée d'un mélange de PBT et de dodécanediamine à raison de 1 à 5 % en poids. Les joncs obtenus à taux massique de verre d'environ 70 % traversent la filière à 270°C alimentée en PBT de grade rigide. Les granulés de longueur 6 mm finalement obtenus possèdent un taux massique de verre d'environ 20 %.

Les propriétés mécaniques du produit obtenu sont les suivantes :

| | |
|---|---|
| module de flexion | : 5230 MPa |
| contrainte à charge maxi. | : 140 MPa |
| énergie de rupture (choc FWI) | : 6,6 Joules |

## Revendications

1. Procédé de fabrication de résines thermoplastiques renforcées de fibres longues consistant à imprégner successivement par extrusion les fibres de deux polymères thermoplastiques selon lequel après avoir imprégné les fibres, sous forme de rovings, d'un polymère thermoplastique de mouillage dans une filière en tête d'équerre, lesdits rovings imprégnés sont repris, à une température supérieure à celle de fusion du polymère thermoplastique de mouillage, dans une seconde filière où ils sont gainés de polymère thermoplastique à renforcer.

2. Procédé selon la revendication 1 caractérisé en ce que préalablement à l'imprégnation des rovings par le polymère thermoplastique de mouillage les rovings sont épanouis par passage dans une zone d'embarrage et en ce qu'après l'imprégnation les rovings sont tirés dans une seconde zone d'embarrage avant d'être conformés et de passer dans la seconde filière de gainage.

3. Procédé selon l'une des revendications 1 ou 2 caractérisé en ce que les rovings imprégnés de polymère thermoplastique de mouillage sortent de la première filière le polymère se trouvant à l'état fondu et entrent dans la seconde filière à une température comprise entre 40 et 80°C.

4. Procédé selon l'une des revendications 1 à 3 caractérisé en ce que dans une première étape on fait passer les rovings dans une zone d'embarrage pour les épanouir, qu'on leur fait traverser une filière d'imprégnation alimentée, au moyen d'une extrudeuse, en polymère thermoplastique de mouillage, que les rovings imprégnés passent dans une seconde zone d'embarrage et qu'ils traversent une filière de conformation et en ce que dans une seconde étape les rovings imprégnés de polymère thermoplastique de mouillage traversent une filière, située sensiblement dans l'alignement de l'outillage de la première étape, alimentée, par une seconde extrudeuse, en polymère thermoplastique à renforcer.

5. Procédé selon l'une des revendications 1 à 4 caractérisé en ce que le polymère thermoplastique de mouillage est directement préparé par greffage ou dégradation contrôlée à l'état fondu dans l'extrudeuse alimentant la filière d'imprégnation.

6. Procédé selon la revendication 5 caractérisé en ce que le polymère thermoplastique de mouillage subit une dégradation peroxydique.

7. Procédé selon la revendication 5 caractérisé en ce que le polymère thermoplastique de mouillage est un polyester saturé dégradé par une diamine de façon à obtenir un oligomère fonctionnel.

8. Procédé selon l'une des revendications 1 à 4 caractérisé en ce que le polymère thermoplastique de mouillage est un produit de polyaddition d'un oligomère polyamide fonctionnalisé avec un coréactif.

9. Procédé selon l'une des revendications 1 à 8 caractérisé en ce que dans la première étape les fibres continues sont imprégnées de résine de mouillage dans un rapport massique de 70 à 75 % de fibres pour 30 à 25 % de polymère.

10. Procédé selon l'une des revendications 1 à 9 caractérisé en ce qu'en sortie de la filière alimentée en polymère thermoplastique à renforcer le produit final possède une composition en masse de : 20 à 40 % de fibres, 8 à 17 % de polymère de mouillage, 72 à 43 % de polymère thermoplastique standard à renforcer.

## Patentansprüche

1. Verfahren zur Herstellung von thermoplastischen Harzen, die mit langen Fasern verstärkt sind, bei dem nacheinander die Fasern mittels Extrusion mit zwei thermoplastischen Polymeren imprägniert werden, dadurch gekennzeichnet, daß nach dem Imprägnieren der Fasern in Form von Rovings mit einem benetzenden thermoplastischen Polymeren in einem Spritzwerkzeug mit Querspritzkopf die imprägnierten Rovings bei einer Temperatur oberhalb der Schmelztemperatur des benetzenden thermoplastischen Polymeren in ein zweites Spritzwerkzeug aufgenommen werden, wo sie mit dem thermoplastischen Polymeren, das Verstärkt werden

EP 0 342 080 B1

soll, umhüllt werden.

2. Verfahren nach Anspruch 1, dadurch gekennzeichnet, daß die Rovings vor dem Imprägnieren mit dem benetzenden thermoplastischen Polymeren gespreitet werden, indem sie durch eine Sperrzone (zone d'embarrage) geleitet werden, und daß die Rovings nach dem Imprägnieren in einer zweiten Sperrzone gezogen werden, bevor sie abgekühlt und in das zweite Spritzwerkzeug für das Umhüllen geführt werden.

3. Verfahren nach einem der Ansprüche 1 oder 2, dadurch gekennzeichnet, daß die mit benetzendem thermoplastischem Polymeren imprägnierten Rovings das erste Spritzwerkzeug verlassen, während das Polymer geschmolzen ist und in das zweite Spritzwerkzeug bei einer Temperatur im Bereich von 40 bis 80°C gelangen.

4. Verfahren nach einem der Ansprüche 1 bis 3, dadurch gekennzeichnet, daß man in einer ersten Stufe die Rovings durch eine Sperrzone führt, um sie zu spreiten, daß man sie durch ein Imprägnier-Spritzwerkzeug führt, das mit Hilfe eines Extruders mit benetzendem thermoplastischem Polymeren gespeist wird, daß die imprägnierten Rovings in eine zweite Sperrzone geführt werden und ein Abkühl-Spritzwerkzeug durchlaufen, und daß in einer zweiten Stufe die mit benetzendem thermoplastischem Polymeren imprägnierten Rovings ein Spritzwerkzeug durchlaufen, das im wesentlichen in eine Linie mit dem Werkzeug der ersten Stufe angeordnet ist und über einen zweiten Extruder mit thermoplastischem Polymeren, das verstärkt werden soll, gespeist wird.

5. Verfahren nach einem der Ansprüche 1 bis 4, dadurch gekennzeichnet, daß das benetzende thermoplastische Polymer direkt durch Pfropfen oder kontrollierten Abbau im geschmolzenen Zustand in dem Extruder hergestellt wird, der das Imprägnier-Spritzwerkzeug speist.

6. Verfahren nach Anspruch 5, dadurch gekennzeichnet, daß das benetzende thermoplastische Polymer mit einem Peroxid angebaut wird.

7. Verfahren nach Anspruch 5, dadurch gekennzeichnet, daß das benetzende thermoplastische Polymer ein mit einem Diamin zu einem funktionellen Oligomeren angebauter gesättigter Ester ist.

8. Verfahren nach einem der Ansprüche 1 bis 4, dadurch gekennzeichnet, daß das benetzende thermoplastische Polymer ein Produkt der Polyaddition eines mit einem Coreaktionspartner funktionalisierten Polyamid-Oligomeren ist.

9. Verfahren nach einem der Ansprüche 1 bis 8, dadurch gekennzeichnet, daß in einer ersten Stufe die kontinuierlichen Fasern mit benetzendem Harz in einem Masseverhältnis von 70 bis 75% Fasern auf 30 bis 25% Polymer imprägniert werden.

10. Verfahren nach einem der Ansprüche 1 bis 9, dadurch gekennzeichnet, daß beim Austritt aus dem Spritzwerkzeug, das mit thermoplastischem Polymeren, das verstärkt werden soll, gespeist wird, das Endprodukt eine auf die Masse bezogene Zusammensetzung von 20 bis 40% Fasern, 8 bis 17% benetzendes Polymer, 72 bis 73% thermoplastisches Standardpolymer, das verstärkt werden soll, aufweist.

## Claims

1. Process for the manufacture of thermoplastic resins reinforced with long fibres, consisting in impregnating successively by extrusion the fibres of two thermoplastic polymers, according to which after the fibres, in the form of rovings, have been impregnated with a thermoplastic anchoring polymer in a cross-head die, the said impregnated rovings are gathered again, at a temperature above that of the melting of the thermoplastic anchoring polymer, in a second die where they are sheathed with thermoplastic polymer to be reinforced.

2. Process according to Claim 1, characterised in that before the rovings are impregnated with the thermoplastic anchoring polymer the rovings are spread apart by passing through a tensioning zone and in that after the impregnation the rovings are drawn in a second tensioning zone before being calibrated and passing through the second sheathing die.

3. Process according to either of Claims 1 and 2, characterised in that the rovings impregnated with thermoplastic anchoring polymer leave the first die, the polymer being in the molten state, and enter the second die at a temperature of between 40 and 80°C.

4. Process according to one of Claims 1 to 3, characterised in that in a first stage the rovings are passed through a tensioning zone in order to be spread apart, that they are passed through an impregnating die fed, using an extruder, with thermoplastic anchoring polymer, that the impregnated rovings pass through a second tensioning zone and that they pass through a calibrating die and in that in a second stage the rovings impregnated with thermoplastic anchoring polymer pass through a die situated substantially in the alignment of the tool of the first stage, fed, using a second extruder, with thermoplastic polymer to be reinforced.

5. Process according to one of Claims 1 to 4, characterised in that the thermoplastic anchoring polymer is prepared directly by grafting or controlled degradation in the molten state in the extruder feeding the impregnating die.

6. Process according to Claim 5, characterised in that the thermoplastic anchoring polymer is subjected

7

to a peroxide degradation.

7. Process according to Claim 5, characterised in that the thermoplastic anchoring polymer is a saturated polyester degraded by a diamine so as to obtain a functional oligomer.

8. Process according to one of Claims 1 to 4, characterised in that the thermoplastic anchoring polymer is a polyaddition product of a polyamide oligomer functionalised with a coreactant.

9. Process according to one of Claims 1 to 8, characterised in that in the first stage the continuous fibres are impregnated with anchoring resin in a mass ratio of 70 to 75% of fibres per 30 to 25% of polymer.

10. Process according to one of Claims 1 to 9, characterised in that on leaving the die fed with thermoplastic polymer to be reinforced the final product has a mass composition of: 20 to 40% of fibres, 8 to 17% of anchoring polymer and 72 to 43% of standard thermoplastic polymer to be reinforced.

figure:1